# EUROPÄISCHE PATENTSCHRIFT

(11) **EP 4 010 977 B1**
(45) Veröffentlichungstag und Bekanntmachung des Hinweises auf die Patenterteilung: **08.01.2025**
(21) Anmeldenummer: 20743690.8
(22) Anmeldetag: 21.07.2020
(51) Int. Cl.: B25F 5/00, H02P 6/185

(54) **VERFAHREN ZUM ERMITTELN EINER ROTORPOSITION EINES ELEKTROMOTORS EINES ELEKTROWERKZEUGS UND ELEKTROWERKZEUG**
METHOD FOR DETERMINING A ROTOR POSITION OF AN ELECTRIC MOTOR OF A POWER TOOL, AND POWER TOOL
PROCÉDÉ DE DÉTERMINATION D'UNE POSITION DE ROTOR D'UN MOTEUR ÉLECTRIQUE D'UN OUTIL ÉLECTRIQUE ET OUTIL ÉLECTRIQUE

(30) Priorität: 09.08.2019 DE 102019211975
(43) Veröffentlichungstag der Anmeldung: 15.06.2022
(73) Patentinhaber: Festool GmbH, 73240 Wendlingen am Neckar (DE)
(72) Erfinder: HOFMANN, Tobias, 73230 Kirchheim (DE); THÜRINGER, Michael, 72663 Großbettlingen (DE)
(74) Vertreter: Patentanwälte Magenbauer & Kollegen Partnerschaft mbB
(86) Internationale Anmeldenummer: PCT/EP2020/070557
(87) Internationale Veröffentlichungsnummer: WO 2021/028166

(56) Entgegenhaltungen:
- DE-A1- 102009 003 295
- DE-A1- 102018 201 052
- US-A1- 2017 310 256

## Beschreibung

Die Erfindung betrifft ein Verfahren zum Ermitteln einer Rotorposition eines Elektromotors eines Elektrowerkzeugs, insbesondere eines Elektro-Schraubwerkzeugs.

Die EP0579694B1, EP1051801B1, EP1746718B1 und DE102016222754A1 beschreiben jeweils Verfahren zur Erfassung einer Rotorposition auf Basis eines Elektromotor-Stroms. Die Verfahren basieren auf einer Abhängigkeit einer Wicklungsinduktivität des Elektromotors von der Rotorposition. Eine Änderung der Rotorposition führt zu einer Änderung der Wicklungsinduktivität, die wiederum zu einer Änderung des Elektromotor-Stroms führt.

Die US 2017/310256 A1 beschreibt ein Verfahren zur Steuerung eines bürstenlosen Permanentmagnetmotors, das eine sequentielle Erregung und den Freilauf einer Phasenwicklung des Motors umfasst. Die Phasenwicklung wird im Freilauf betrieben, wenn der Phasenstrom einen oberen Schwellenwert überschreitet. Das Verfahren umfasst ferner ein Messen eines Parameters, der entweder der Magnitude des Phasenstroms während oder am Ende des Freilaufs entspricht, wenn die Phasenwicklung dem Freilauf für eine feste Zeitperiode unterzogen wird, oder dem Zeitintervall während des Freilaufs oder während einer Anregung, wenn sich die Phasenwicklung im Freilauf befindet bis der Phasenstrom unter den unteren Schwellenwert fällt. Der gemessene Parameter wird dann mit einem Sättigungsschwellenwert verglichen, und der Rotor wird als an einer vorbestimmten Position befindlich bestimmt. In Ansprechen darauf, dass bestimmt wird, dass sich der Rotor an der vorbestimmten Position befindet, wird die Phasenwicklung kommutiert, nachdem eine Kommutationsperiode abgelaufen ist.

Die DE 10 2009 003295 A1 beschreibt ein Gerät zum Schätzen der Rotorposition für bürstenlose Motoren. Das Gerät kann als Startsystem für bürstenlose Motoren verwendet werden. Das Gerät legt Spannungen an die Spulen jeweils an. In jeder Anlegezeitdauer zählt das Gerät eine Spannungsanlegezeitdauer, bis der Stromwert einen Stromschwellwert erreicht. Da eine Spule, die eine Rotorstoppposition angibt, dazu neigt, magnetisch gesättigt zu werden, schätzt das Gerät die Rotorstoppposition auf der Grundlage der Spannungsanlegezeitdauer. Dann beginnt das Gerät eine Schaltabfolge auf der Grundlage der Rotorstoppposition.

Die DE 10 2018 201052 A1 beschreibt ein Verfahren zum Steuern einer Drehzahl eines Elektromotors eines Schraubwerkzeuges, wobei nach einer Aktivierung des Schraubwerkzeuges ein Stromsignal zum Steuern des Schraubwerkzeuges in einer Startphase mit der Zeit erhöht wird, wobei während der Startphase überprüft wird, ob ein Betriebsparameter des Elektromotors größer als ein Vergleichswert ist, wobei nach Überschreiten des Vergleichswertes das Stromsignal so lange reduziert wird, bis ein zweiter Betriebszustand des Elektromotors erreicht ist.

Eine Erfassung der Rotorposition auf Basis des Elektromotor-Stroms soll auch als sensorlose Erfassung der Rotorposition bezeichnet werden.

Eine Aufgabe der Erfindung besteht darin, ein Verfahren bereitzustellen, mit dem in effizienter Weise eine zuverlässige Ermittlung der Rotorposition ermöglicht wird.

Die Aufgabe wird gelöst durch ein Verfahren gemäß Anspruch 1.

Dadurch, dass die Erfassung der Rotorposition auf Basis eines Elektromotor-Stroms ermittelt wird - also insbesondere sensorlos erfolgt - kann auf eine entsprechende Sensorik, beispielsweise Signalgeber, zur Erfassung der Rotorposition verzichtet werden. Zweckmäßigerweise umfasst das Elektrowerkzeug keine Sensoren zur Erfassung, insbesondere direkten Erfassung, der Rotorposition. Insbesondere werden im Rahmen des Verfahrens keine Sensoren zur Erfassung, insbesondere direkten Erfassung, der Rotorposition verwendet.

Ferner kann durch die Prüfung, ob der Elektromotor-Strom unter dem Schwellenwert liegt, gewährleistet werden, dass die Ermittlung der Rotorposition zuverlässig ist. Der Elektromotor-Strom wird zweckmäßigerweise als Indikator für die magnetische Sättigung des Elektromotors verwendet. Bei magnetischer Sättigung des Elektromotors ist die Abhängigkeit der Wicklungsinduktivität von der Rotorposition in der Regel nur noch sehr gering oder nicht mehr gegeben. Bei magnetischer Sättigung des Elektromotors kann daher in der Regel nicht mehr zuverlässig aus dem (von der Wicklungsinduktivität abhängigen) Elektromotor-Strom auf die Rotorposition geschlossen werden.

Konventionell wird zur Vermeidung dieses Problems der Elektromotor so groß dimensioniert, dass im bestimmungsgemäßen Betrieb keine magnetische Sättigung auftritt, so dass vermieden wird, dass die Erfassung der Rotorposition auf Basis des Elektromotor-Stroms durch eine magnetische Sättigung beeinträchtigt wird.

Bei dem vorliegenden Verfahren wird hingegen zweckmäßigerweise eine magnetische Sättigung im bestimmungsgemäßen Betrieb zugelassen. Der Elektromotor des Elektrowerkzeugs muss dementsprechend nicht so groß dimensioniert sein, dass im bestimmungsgemäßen Betrieb keine magnetische Sättigung auftritt.

Nichtdestotrotz kann mit dem Elektrowerkzeug eine zuverlässige Erfassung der Rotorposition erfolgen. Dadurch, dass vor der Erfassung der Rotorposition geprüft wird, ob der Elektromotor-Strom über dem Schwellenwert liegt, und die Erfassung der Rotorposition als Reaktion darauf erfolgt, dass der Elektromotor-Strom unter dem Schwellenwert liegt, kann zweckmäßigerweise gewährleistet werden, dass die Erfassung der Rotorposition in einem Zustand erfolgt, in dem keine magnetische Sättigung des Elektromotors vorliegt und die Erfassung der Rotorposition zweckmäßigerweise nicht beeinträchtigt ist. Folglich kann in effizienter Weise eine zuverlässige Erfassung der Rotorposition erzielt werden.

Der Elektromotor wird in zeitlich aufeinanderfolgenden, insbesondere nicht-überlappenden Betriebsphasen betrieben. Die Betriebsphasen umfassen eine Positionsbestimmungsphase, in der die Rotorposition ermittelt wird und in der der erste Elektromotor-Strom kleiner als der Schwellenwert ist. Die Betriebsphasen umfassen ferner eine Drehmomentphase. Zweckmäßigerweise wird in der Drehmomentphase die Rotorposition nicht ermittelt und zweckmäßigerweise ist in der Drehmomentphase der erste Elektromotor-Strom größer als der Schwellenwert. Zweckmäßigerweise verwendet das Elektrowerkzeug in der Drehmomentphase die in der Positionsbestimmungsphase ermittelte Rotorposition für die Ansteuerung des Elektromotors.

Vorteilhafte Weiterbildungen sind Gegenstand der Unteransprüche.

Die Erfindung betrifft ferner ein Elektrowerkzeug gemäß Anspruch 13.

Weitere exemplarische Details sowie beispielhafte Ausführungsformen werden nachstehend unter Bezugnahme auf die Figuren erläutert. Dabei zeigt
- Figur 1: eine schematische Darstellung eines Elektrowerkzeugs,
- Figur 2: eine Schnittdarstellung eines Elektromotors,
- Figur 3: ein Schaltdiagramm einer Ansteuerschaltung,
- Figur 4: ein Flussdiagramm einer Ansteuerprozedur,
- Figur 5: einen zeitlichen Verlauf eines Elektromotor-Stroms.

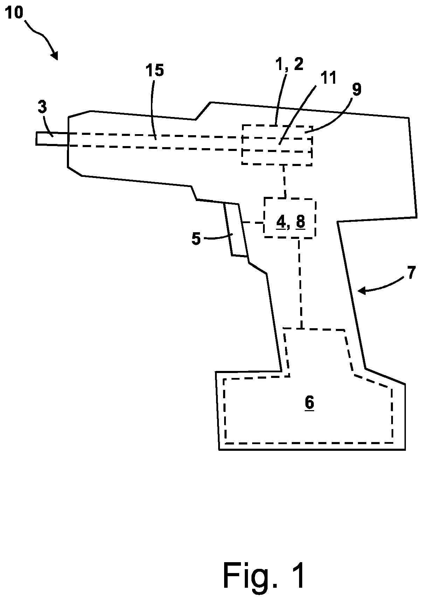

Die Figur 1 zeigt ein Elektrowerkzeug 10 gemäß einer exemplarischen Ausgestaltung. Das Elektrowerkzeug 10 ist hier exemplarisch als Elektro-Schraubwerkzeug, insbesondere als Akkuschrauber, ausgeführt. Alternativ dazu kann das Elektrowerkzeug 10 als ein anderes Elektrowerkzeug ausgeführt sein, insbesondere als ein Elektrowerkzeug mit rotierendem Werkzeug. Das Elektrowerkzeug kann beispielsweise als Säge, Schleifer, Bohrer und/oder Fräse ausgeführt sein. Das Elektrowerkzeug 10 ist insbesondere ein handgeführtes Elektrowerkzeug. Alternativ kann das Elektrowerkzeug 10 ein stationäres oder halbstationäres Elektrowerkzeug sein.

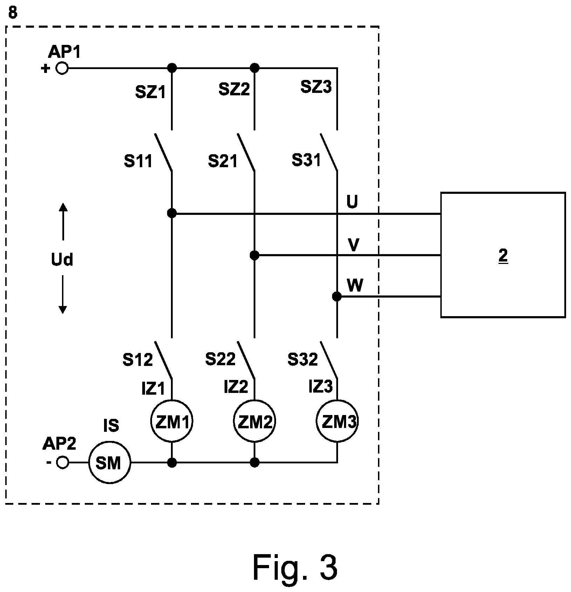

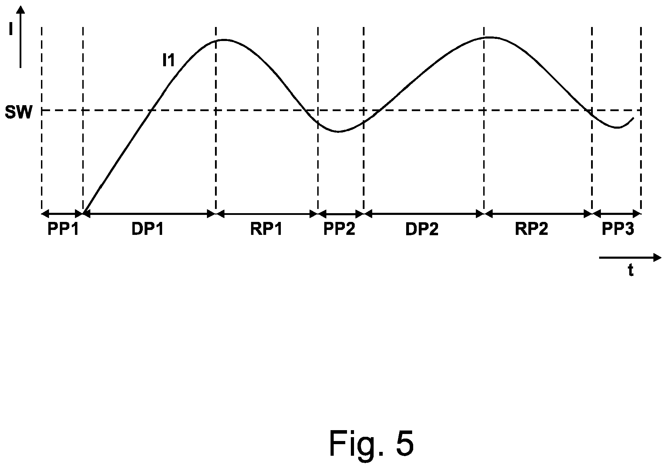

Das Elektrowerkzeug 10 umfasst einen Elektromotor 2. Das Elektrowerkzeug 10 ist ausgebildet, zu prüfen, ob ein erster Elektromotor-Strom I1 unter einem Schwellenwert SW liegt. Ein exemplarischer zeitlicher Verlauf des Elektromotor-Stroms I1 ist zusammen mit dem Schwellenwert SW in der Figur 5 gezeigt. Das Elektrowerkzeug 10 ist ausgebildet, in Ansprechen darauf, dass die Prüfung ergibt, dass der erste Elektromotor-Strom I1 unter dem Schwellenwert SW liegt, eine Rotorposition des Elektromotors 2 auf Basis des ersten Elektromotor-Stroms I1 und/oder eines zweiten Elektromotor-Stroms zu ermitteln. Der zweite Elektromotor-Strom umfasst beispielsweise einen oder mehrere der in der Figur 3 gezeigten Zweig-Ströme IZ1, IZ2, IZ3 und/oder den in der Figur 3 gezeigten Summenstrom IS.

Das Elektrowerkzeug 10 ist insbesondere ausgebildet, die Ermittlung der Rotorposition auf Basis des ersten und/oder zweiten Elektromotor-Stroms als Reaktion darauf durchzuführen, dass die Prüfung ergibt, dass der Elektromotor-Strom I1 unter dem Schwellenwert SW liegt. Vorzugsweise ist das Elektrowerkzeug 10 ausgebildet, als Reaktion darauf, dass die Prüfung ergibt, dass der Elektromotor-Strom I1 über dem Schwellenwert SW liegt, keine Ermittlung der Rotorposition auf Basis des ersten und/oder zweiten Elektromotor-Stroms durchzuführen. Insbesondere ist das Elektrowerkzeug 10 ausgebildet, die Ermittlung der Rotorposition auf Basis des ersten und/oder zweiten Elektromotor-Stroms nur dann durchzuführen, wenn die Prüfung ergibt, dass der Elektromotor-Strom I1 unter dem Schwellenwert SW liegt.

Wie eingangs bereits erwähnt, dient der erste Elektromotor-Strom I1 als Indikator für die magnetische Sättigung des Elektromotors 2. Dadurch, dass die Ermittlung der Rotorposition dann durchgeführt wird, wenn der Elektromotor-Strom I1 unter dem Schwellenwert SW liegt - also insbesondere dann, wenn davon ausgegangen werden kann, dass keine (signifikante) magnetische Sättigung gegeben ist - kann gewährleistet werden, dass die Ermittlung der Rotorposition nicht durch eine magnetische Sättigung des Elektromotors 2 beeinträchtigt wird.

Nachstehend werden weitere exemplarische Details erläutert.

### Zunächst zum Elektrowerkzeug:

Das Elektrowerkzeug 10 umfasst einen elektrischen Antrieb 1. Der elektrische Antrieb 1 umfasst den Elektromotor 2. Optional umfasst der elektrische Antrieb 1 ferner ein (in den Figuren nicht gezeigtes) Getriebe. Der Elektromotor 2 ist vorzugsweise als bürstenloser Gleichstrommotor ausgebildet. Der Elektromotor 2 ist insbesondere ein DrehstromSynchronmotor mit Erregung durch Permanentmagnete. Zweckmäßigerweise ist der Elektromotor 2 ein EC-Motor (electronically commutated Motor).

Das Elektrowerkzeug 10 umfasst ferner ein Werkzeug 3, beispielsweise ein Schraubwerkzeug, das durch den Elektromotor 2 angetrieben werden kann. Insbesondere kann das Werkzeug 3 durch den Elektromotor 2 in Rotation versetzt werden. Das Werkzeug 3 ist exemplarisch über eine Welle 15 (und/oder das optional vorhandene Getriebe) mit dem Elektromotor 2 gekoppelt.

Das Elektrowerkzeug 10 umfasst zweckmäßigerweise ferner eine Steuereinrichtung 4 und eine Bedieneinrichtung 5. Optional umfasst das Elektrowerkzeug 10 ferner einen Energiespeicher 6, beispielsweise einen Akku.

Die Steuereinrichtung 4 umfasst zweckmäßigerweise eine Rechnereinheit, beispielsweise einen Mikrocontroller. Die Steuereinrichtung 4 dient insbesondere dazu, die vorgenannte Prüfung, ob der erste Elektromotor-Strom I1 unter dem Schwellenwert SW liegt, und/oder die Ermittlung der Rotorposition auf Basis des ersten und/oder zweiten Elektromotor-Stroms durchzuführen. Die Steuereinrichtung 4 umfasst zweckmäßigerweise eine Ansteuerschaltung 8 zur Bereitstellung der Ansteuerspannungen für den Elektromotor 2. Eine exemplarische Ausgestaltung einer Ansteuerschaltung 8 ist in der Figur 3 gezeigt.

Die Bedieneinrichtung 5 umfasst exemplarisch eine Taste, insbesondere eine Abzugtaste. Über die Bedieneinrichtung 5 kann ein Benutzer zweckmäßigerweise den Antrieb des Werkzeugs 3 durch den Elektromotor 2 steuern, insbesondere, mit welcher Drehzahl und/oder welchem Drehmoment das Werkzeug 3 angetrieben wird. Zweckmäßigerweise ist die Steuereinrichtung 4 ausgebildet, eine Betätigung der Bedieneinrichtung 5 zu erfassen und gemäß der Betätigung die Ansteuerung des Elektromotors 2 durchzuführen.

Die Energie zum Betrieb des Elektrowerkzeugs 10, insbesondere der Steuereinrichtung 4 und/oder des Elektromotors 2 wird zweckmäßigerweise von dem Energiespeicher 6 bereitgestellt.

Das Elektrowerkzeug 10 umfasst exemplarisch einen Griff 7, mit dem das Elektrowerkzeug 10 von einem Benutzer gegriffen und getragen werden kann, insbesondere einhändig.

Exemplarisch umfasst das Elektrowerkzeug 10 ein Gehäuse, in dem der elektrische Antrieb 1, die Steuereinrichtung 4 und/oder der Energiespeicher 6 angeordnet sind. Vorzugsweise ist die Bedieneinrichtung 5 außen am Gehäuse angeordnet. Zweckmäßigerweise bildet der Griff 7 einen Teil des Gehäuses.

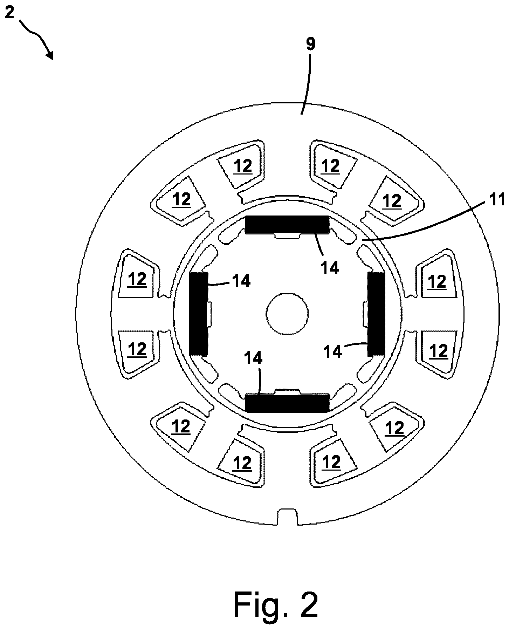

Unter Bezugnahme auf die Figur 2 soll nachstehend auf eine exemplarische Ausgestaltung des Elektromotors 2 eingegangen werden:
Der Elektromotor 2 umfasst einen Stator 9 und einen Rotor 11. Der Stator 9 umfasst eine Mehrzahl von Wicklungen 12, die um die Drehachse des Rotors 11 herum verteilt angeordnet sind. Der Rotor 11 umfasst eine Mehrzahl von Permanentmagneten 14, die um die Drehachse des Rotors 11 herum verteilt angeordnet sind.

Der Rotor 11 ist vorzugsweise nicht radial-symmetrisch ausgebildet, insbesondere in Bezug auf seine magnetischen Eigenschaften. Je nach Rotorposition des Rotors 11 ändert sich der Einfluss des Rotors auf die Induktivitäten der Wicklungen 12. Zweckmäßigerweise sind die Induktivitäten der Wicklungen 12 jeweils abhängig von der Rotorposition des Rotors 11. Mit dem Begriff Rotorposition ist insbesondere die Drehlage des Rotors 11 in Bezug auf dessen Drehachse gemeint. Gemäß einer alternativen Ausgestaltung ist der Rotor 11 radial-symmetrisch ausgebildet.

Zweckmäßigerweise werden die Wicklungen 12 über die Ansteuerschaltung 7 derart bestromt, dass ein um die Drehachse des Rotors 11 drehendes Drehfeld bereitgestellt wird, das durch Interaktion mit den Permanentmagneten 14 den Rotor 11 zu einer Drehbewegung um seine Drehachse antreibt.

Der Stator 9 und/oder der Rotor 11 umfassen zweckmäßigerweise magnetisierbares, insbesondere ferromagnetisches, Material, beispielsweise Eisen. Ab einer bestimmten Stromstärke der durch die Wicklungen 12 fließenden Ströme geht das magnetisierbare Material in magnetische Sättigung. Bei magnetischer Sättigung wird die Abhängigkeit der Induktivitäten der Wicklungen 12 - und damit der durch die Wicklungen 12 fließenden Ströme - von der Rotorposition reduziert und/oder eliminiert.

Die magnetische Sättigung des Elektromotors 2, insbesondere des genannten magnetisierbaren Materials des Stators 9 und/oder Rotors 11, wird zweckmäßigerweise durch den Schwellenwert SW angezeigt. Zweckmäßigerweise entspricht der Schwellenwert SW einer Stromstärke des ersten Elektromotor-Stroms I1, bei der eine magnetische Sättigung des Elektromotors 2, insbesondere des genannten magnetisierbaren Materials des Stators 9 und/oder Rotors 11, gegeben ist. Der Schwellenwert SW wird zweckmäßigerweise im Voraus ermittelt und ist in dem Elektrowerkzeug 10, insbesondere in der Steuereinrichtung 4 abgespeichert.

Der erste Elektromotor-Strom I1 umfasst zweckmäßigerweise einen, mehrere oder sämtliche durch die Wicklungen 12 fließende Ströme. Beispielsweise ist der erste Elektromotor-Strom I1 die Summer der durch die Wicklungen 12 fließenden Ströme. Insbesondere ist der erste Elektromotorstrom I1 die Summe der in die Wicklungen 12 oder aus den Wicklungen 12 fließenden Ströme.

Unter Bezugnahme auf die Figur 3 soll nachstehend näher auf die Ansteuerung des Elektromotors 2 eingegangen werden:
Die Figur 3 zeigt eine exemplarische Ausgestaltung der Ansteuerschaltung 8. Die Ansteuerschaltung 8 ist zweckmäßigerweise als Wechselrichter ausgebildet. Die Ansteuerschaltung 8 dient insbesondere dazu, mehrere Ansteuersignale zur Ansteuerung des Elektromotors 2, insbesondere der Wicklungen 12, bereitzustellen. Exemplarisch stellt die Ansteuerschaltung 8 drei Ansteuersignale bereit. Die Ansteuerschaltung 8 verfügt exemplarisch über einen ersten Ausgang U zur Bereitstellung eines ersten Ansteuersignals, einen zweiten Ausgang V zur Bereitstellung eines zweiten Ansteuersignals und einen dritten Ausgang W zur Bereitstellung eines dritten Ansteuersignals.

Die Ansteuerschaltung 8 stellt die Ansteuersignale zweckmäßigerweise auf Basis einer zwischen zwei Anschlusspunkten AP1, AP2 anliegenden Versorgungspannung Ud bereit. Die Versorgungsspannung Ud ist zweckmäßigerweise eine Gleichspannung.

Die drei Ansteuersignale können auch als Phasen bezeichnet werden. Bei den Ansteuersignalen handelt es sich vorzugsweise um Spannungssignale.

Die Ansteuerschaltung 8 umfasst exemplarisch für jeden der Ausgänge U, V, W einen jeweiligen Schaltungszweig SZ1, SZ2, SZ3. Die Schaltungszweige SZ1, SZ2, SZ3 sind jeweils zwischen die beiden Anschlusspunkts AP1, AP2 geschaltet. Die Schaltungszweige SZ1, SZ2, SZ3 sind exemplarisch jeweils als Halbbrücke ausgeführt. Jeder Schaltungszweig SZ1, SZ2, SZ3 umfasst zweckmäßigerweise jeweils zwei Schalter - einen ersten Schalter S11, S21, S31 und einen zweiten Schalter S12, S22, S32. Über den jeweils ersten Schalter S11, S21, S31 lässt sich der jeweilige Ausgang U, V, W mit dem ersten Anschlusspunkt AP1 verbinden und über den jeweils zweiten Schalter S12, S22, S33 mit dem zweiten Anschlusspunkt AP2.

Über Ansteuerung der ersten und zweiten Schalter S11, S21, S31, S12, S22, S32 lassen sich als die Ansteuersignale zweckmäßigerweise Wechselsignale, insbesondere zueinander phasenverschobene Wechselsignale, bereitstellen, um den Rotor 11 anzutreiben.

Das Elektrowerkzeug 10 ist ausgebildet, den ersten Elektromotor-Strom I1 und/oder den zweiten Elektromotor-Strom zu erfassen. Der erste Elektromotor-Strom I1 und/oder der zweite Elektromotor-Strom sind Ströme, die durch eine, mehrere oder sämtliche Wicklungen 12 des Elektromotors 2 fließen. Der erste Elektromotor-Strom I1 und der zweite Elektromotor-Strom können der gleiche Strom sein oder können verschiedenen Ströme sein.

Exemplarisch ist der erste Elektromotor-Strom I1 der Gesamtstrom, der durch die Wicklungen 12 fließt. Dieser Strom wird exemplarisch als der Summenstrom IS erfasst, der in den zweiten Anschlusspunkt AP2 fließt. Alternativ oder zusätzlich dazu kann der Gesamtstrom auch als ein Summenstrom IS erfasst werden, der in oder aus dem ersten Anschlusspunkt AP1 fließt.

Das Elektrowerkzeug 10, insbesondere die Ansteuerschaltung 8, umfasst exemplarisch eine Summenstrom-Messeinheit SM zur Erfassung des Summenstroms IS. Die Summenstrom-Messeinheit SM ist exemplarisch zwischen den zweiten Anschlusspunkt AP2 und den zweiten Schaltern S12, S22, S32 geschaltet.

Der erste Elektromotor-Strom I1 kann ferner eine, mehrere oder sämtliche der in den Schaltungszweigen SZ1, SZ2, SZ3 fließenden Zweig-Strömen IZ1, IZ2, IZ3 umfassen.

Zweckmäßigerweise ist das Elektrowerkzeug 10 ausgebildet, einen, mehrere oder sämtliche Zweig-Ströme IZ1, IZ2, IZ3 jeweils mit dem Schwellenwert SW zu vergleichen und die Ermittlung der Rotorposition als Reaktion darauf durchzuführen, dass jeder verglichene Zweig-Strom IZ1, IZ2, IZ3 kleiner als der Schwellenwert SW ist.

Das Elektrowerkzeug 10, insbesondere die Ansteuerschaltung 8, umfasst exemplarisch mehrere Zweigstrom-Messeinheiten ZM1, ZM2, ZM3 zur Erfassung der jeweiligen Zweig-Ströme IZ1, IZ2, IZ3. Die Zweigstrom-Messeinheiten ZM1, ZM2, ZM3 sind jeweils in einem jeweiligen Schaltungszweig SZ1, SZ2, SZ3 geschaltet.

Alternativ zu der gezeigten Ausgestaltung, bei der für jeden Schaltungszweig SZ1, SZ2, SZ3 eine eigene Zweigstrom-Messeinheit ZM1, ZM2, ZM3 vorhanden ist, können auch weniger Zweigstrom-Messeinheiten als Schaltungszweige vorhanden sein. Beispielsweise kann für einen Schaltungszweig keine Zweigstrom-Messeinheit vorhanden sein. Der Zweigstrom dieses Schaltungszweigs wird dann zweckmäßigerweise von dem Elektrowerkzeug 10 berechnet, insbesondere auf Basis der anderen Zweigströme und des Summenstroms.

Im Folgenden soll auf die Ermittlung der Rotorposition auf Basis des ersten und/oder zweiten Elektromotor-Stroms eingegangen werden.

Zweckmäßigerweise ist das Elektrowerkzeug 10 ausgebildet, den Elektromotor 2 mit einem Testsignal zu beaufschlagen und die Rotorposition auf Basis der Reaktion des ersten Elektromotor-Stroms und/oder zweiten Elektromotor-Stroms auf das Testsignal zu ermitteln. Zweckmäßigerweise erfolgt durch die Beaufschlagung mit dem Testsignal kein Antrieb des Rotors 11. Das Testsignal umfasst zweckmäßigerweise eine Abfolge von Schaltzuständen und/oder Spannungswerten für die Ausgänge U, V, W, die über Ansteuerung der ersten und zweiten Schalter S11, S21, S31, S12, S22, S32 erzielt werden.

Konkrete Testsignale zur Ansteuerung des Elektromotors 2 zum Zwecke der Bestimmung der Rotorposition werden in dem eingangs genannten Stand der Technik beschrieben. Insbesondere sind Testsignale aus dem sogenannten "Inform-Verfahren" bekannt. Zweckmäßigerweise ist das Elektrowerkzeug 10 ausgebildet, den Elektromotor 2 mit einem Testsignal gemäß dem Inform-Verfahren anzusteuern.

Als Reaktion auf das Testsignal kann sich der erste und/oder zweite Elektromotor-Strom ändern. Das Elektrowerkzeug 10 ist ausgebildet, den ersten und/oder zweiten Elektromotor-Strom zu erfassen und auf dessen Basis die Rotorposition zu ermitteln. Zweckmäßigerweise erfasst das Elektrowerkzeug 10 als den zweiten Elektromotor-Strom die Zweigströme IZ1, IZ2, IZ3 und ermittelt die Rotorposition auf Basis der Zweigströme IZ1, IZ2, IZ3, insbesondere auf Basis des zeitlichen Verlaufs und/oder bestimmter Signalcharakteristiken der Zweigströme IZ1, IZ2, IZ3.

Alternativ oder zusätzlich erfasst das Elektrowerkzeug 10 als den zweiten Elektromotor-Strom zwei der Zweigströme IZ1, IZ2, IZ3 und ermittelt die Rotorposition auf Basis der beiden erfassten Zweigströme, insbesondere auf Basis des zeitlichen Verlaufs und/oder bestimmter Signalcharakteristiken der beiden erfassten Zweigströme.

Alternativ oder zusätzlich erfasst das Elektrowerkzeug 10 als den zweiten Elektromotor-Strom den Summenstrom IS und ermittelt die Rotorposition auf Basis des Summenstroms IS, insbesondere auf Basis des zeitlichen Verlaufs und/oder bestimmter Signalcharakteristiken des Summenstroms IS.

Konkrete mathematische Verfahren zur Ermittlung der Rotorposition auf Basis von Zweigströmen werden in dem eingangs genannten Stand der Technik beschrieben. Insbesondere sind diese mathematischen Verfahren aus dem Inform-Verfahren bekannt. Zweckmäßigerweise ist das Elektrowerkzeug 10 ausgebildet, die Rotorposition gemäß dem Inform-Verfahren mathematisch zu ermitteln.

Das Elektrowerkzeug 10 ist insbesondere ausgebildet, auf Basis der ermittelten Rotorposition eine Ansteuerung, insbesondere eine Kommutierung, des Elektromotors 2 durchzuführen. Das Elektrowerkzeug 10 ist insbesondere ausgebildet, unter Verwendung der ermittelten Rotorposition eine sensorlose Kommutierung des Elektromotors 2 durchzuführen. Insbesondere ist das Elektrowerkzeug 10 ausgebildet, die an den Ausgängen U, V, W bereitgestellten Ansteuersignale auf Basis der ermittelten Rotorposition bereitzustellen. Zweckmäßigerweise stellt das Elektrowerkzeug 10 die an den Ausgängen U, V, W bereitgestellten Ansteuersignale auf Basis der ermittelten Rotorposition und auf Basis einer durch die Bedieneinrichtung 5 eingegebenen Benutzereingabe, beispielsweise eine angeforderte Drehzahl und/oder ein angefordertes Drehmoment, bereit.

Das Elektrowerkzeug 10 ist zweckmäßigerweise ausgebildet, die Ansteuerung des Elektromotors 2, insbesondere die Kommutierung, auf Basis der zuletzt ermittelten Rotorposition solange fortzusetzen, bis eine neue ermittelte Rotorposition vorliegt. Wenn beispielsweise der erste Elektromotor-Strom I1 über dem Schwellenwert SW liegt, und das Elektrowerkzeug 10 aus diesem Grund zu diesem Zeitpunkt keine Ermittlung der Rotorposition durchführt, so verwendet das Elektrowerkzeug 10 zu diesem Zeitpunkt für die Ansteuerung des Elektromotors 2 weiterhin die zuletzt ermittelte Rotorposition. Zweckmäßigerweise führt das Elektrowerkzeug 10 durch die Ansteuerung des Elektromotors 2 auf Basis einer ermittelten ersten Rotorposition eine Rotation des Rotors 11 um 90 Grad elektrisch durch und setzt dann, sofern keine neue Rotorposition des Rotors 11 ermittelt wurde, die Ansteuerung auf Basis der ersten Rotorposition fort. Dies kann dazu führen, dass der Rotor 11 nach der Rotation um 90 Grad elektrisch stehen bleibt, bis das Elektrowerkzeug 10 eine neue Rotorposition ermittelt hat und die Ansteuerung auf Basis der neuen Rotorposition durchführt. Eine Rotation von 90 Grad elektrisch entspricht beispielsweise einer Rotation des Rotors um 45 Grad mechanisch bei zwei Polpaaren und 30 Grad mechanisch bei drei Polpaaren.

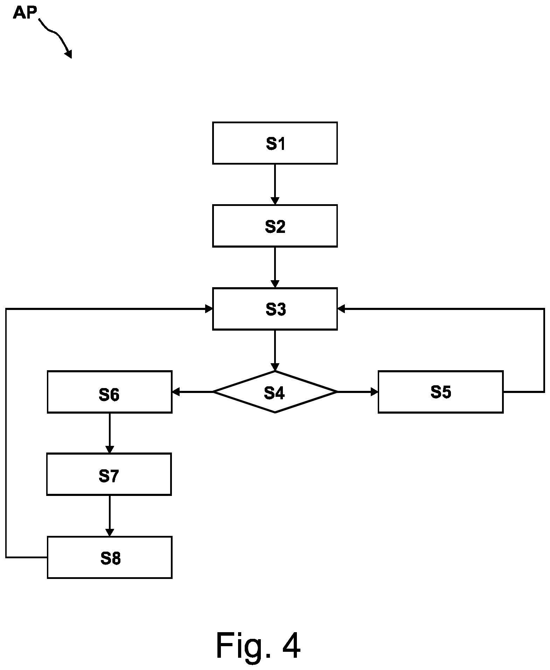

Unter Bezugnahme auf die Figuren 4 und 5 soll nachstehend näher auf eine exemplarische Ansteuerprozedur AP zur Ansteuerung des Elektromotors 2 eingegangen werden. Die Ansteuerprozedur ist ein Ausführungsbeispiels eines Verfahrens zum Ermitteln der Rotorposition des Elektromotors 2 des Elektrowerkzeugs 10.

Die Ansteuerprozedur AP wird zweckmäßigerweise von dem Elektrowerkzeug 10, insbesondere von der Steuereinrichtung 4, ausgeführt.

Die Ansteuerprozedur AP beginnt mit einem optionalen Schritt S1, bei dem die Rotorposition auf Basis des ersten und/oder zweiten Elektromotor-Stroms ermittelt wird, zweckmäßigerweise in einem Zustand, in dem der Rotor 11 noch nicht angetrieben wird und sich zweckmäßigerweise nicht bewegt. Nach der Ermittlung der Rotorposition wird der optionale Schritt S2 durchgeführt, bei dem der Elektromotor 2 gestartet wird; also insbesondere der erste Elektromotor-Strom I1 soweit erhöht wird, dass der Rotor 11 angetrieben wird und zweckmäßigerweise in Bewegung versetzt wird.

Wird die Ansteuerprozedur AP in einem Zustand gestartet, in dem der Elektromotor 2 bereits läuft, sind die Schritte S1 und S2 nicht notwendig und sind zweckmäßigerweise nicht vorhanden.

Die Ansteuerprozedur AP fährt mit dem Schritt S3 fort, bei dem eine Ansteuerung des Elektromotors 2, insbesondere eine Bestromung der Wicklungen 12, erfolgt, um ein Drehmoment zu erzeugen, mit dem das Werkzeug 3 beaufschlagt wird. Bei dem Schritt S3 können die Wicklungen 12 so stark bestromt werden, dass der erste Elektromotor-Strom I1 über den Schwellenwert SW steigt oder dass der erste Elektromotor-Strom I1 unter dem Schwellenwert SW bleibt.

Vorzugsweise erfolgt im Schritt S3 die Ansteuerung des Elektromotors 2 auf Basis der in einem vorherigen Schritt (beispielsweise S2, S5 oder S8) ermittelten Rotorposition.

Im Schritt S4 wird geprüft, ob der erste Elektromotor-Strom I1 kleiner als der Schwellenwert SW ist. Sofern sich bei der Prüfung ergibt, dass der erste Elektromotor-Strom I1 kleiner als der Schwellenwert SW ist, fährt die Ansteuerprozedur mit dem Schritt S5 fort, bei dem die Rotorposition auf Basis des ersten und/oder zweiten Elektromotor-Stroms ermittelt wird. Zweckmäßigerweise wird bei dem Schritt S5 der Elektromotor 2, insbesondere die Wicklungen 12, mit dem Testsignal angesteuert. Ferner werden bei dem Schritt S5 zweckmäßigerweise die sich als Reaktion auf das Testsignal ergebenden Zweigströme IZ1, IZ2, IZ3 erfasst und auf Basis dieser Zweigströme IZ1, IZ2, IZ3 die Rotorposition ermittelt. Die Ansteuerprozedur AP kehrt dann zweckmäßigerweise zum Schritt S3 zurück.

Sofern sich bei der Prüfung ergibt, dass der erste Elektromotor-Strom I1 größer als der Schwellenwert SW ist, fährt die Ansteuerprozedur mit den Schritten S6 und S7 fort.

Zweckmäßigerweise ist das Elektrowerkzeug 10 ausgebildet, als Reaktion darauf, dass die Prüfung ergibt, dass der Elektromotor-Strom I1 über dem Schwellenwert SW liegt, keine Ermittlung der Rotorposition auf Basis des ersten und/oder zweiten Elektromotor-Stroms durchzuführen. Insbesondere ist das Elektrowerkzeug 10 ausgebildet, dann, wenn die Prüfung ergibt, dass der Elektromotor-Strom I1 über dem Schwellenwert SW liegt, keine Ansteuerung des Elektromotors 2 mit dem Testsignal durchzuführen und/oder keine Erfassung der sich als Reaktion auf das Testsignal ergebenden Zweigströme IZ1, IZ2, IZ3 durchzuführen und/oder keine Ermittlung der Rotorpositionen auf Basis dieser Zweigströme IZ1, IZ2, IZ3 durchzuführen. Dementsprechend wird in den Schritten S6 und S7 keine Ermittlung der Rotorposition auf Basis des ersten und/oder zweiten Elektromotor-Stroms durchgeführt.

Zweckmäßigerweise ist das Elektrowerkzeug 10 ausgebildet, als Reaktion darauf, dass die Prüfung ergibt, dass der Elektromotor-Strom I1 über dem Schwellenwert SW liegt, den Elektromotor-Strom I1 zu reduzieren, bis der Elektromotor-Strom I1 unter dem Schwellenwert SW liegt. In der Ansteuerprozedur AP erfolgt dies exemplarisch dadurch, dass in dem Schritt S6 die Ansteuerung des Elektromotors 2 angehalten wird. Beispielsweise werden die Motorphasen, insbesondere die Ansteuersignale, des Elektromotors 2 ausgeschaltet. Exemplarisch wird die Ansteuerschaltung 8 so geschaltet, dass sich die in den Wicklungen 12 fließenden Ströme reduzieren. Beispielsweise werden alle ersten Schalter S11, S21, S31 geöffnet (also auf "nicht-leitend" gestellt) und alle zweiten Schalter S21, S22, S32 geschlossen (also auf "leitend" gestellt). Alternativ dazu werden alle ersten Schalter S11, S21, S31 geschlossen und alle zweiten Schalter S21, S22, S32 geöffnet.

Im Schritt S7 wird gewartet, beispielsweise bei weiterhin angehaltener Ansteuerung des Elektromotors 2, bis der erste Elektromotor-Strom I1 unter den Schwellenwert SW fällt.

Das Elektrowerkzeug 10 ist zweckmäßigerweise ausgebildet, nach der Reduzierung des ersten Elektromotor-Stroms I1 unter den Schwellenwert SW eine Ermittlung der Rotorposition auf Basis des ersten und/oder zweiten Elektromotor-Stroms durchzuführen. Die Ermittlung der Rotorposition erfolgt exemplarisch im Schritt S8.

Die Ansteuerprozedur fährt dann mit dem Schritt S3 fort. Zweckmäßigerweise ist das Elektrowerkzeug ausgebildet, nach einer Ermittlung der Rotorposition den ersten Elektromotor-Strom I1 über den Schwellenwert SW zu erhöhen, beispielsweise im Rahmen des Schritts S3.

Unter Bezugnahme auf die Figur 5 sollen nachstehend verschiedene Phasen erläutert werden, die bei der Ansteuerung des Elektromotors, insbesondere bei Durchführung der Ansteuerprozedur AP, durchlaufen werden.

Die Figur 5 zeigt einen zeitlichen Verlauf des ersten Elektromotor-Stroms I1 zusammen mit nacheinander durchgeführten Betriebsphasen des Elektrowerkzeugs 10. Die Betriebsphasen umfassen exemplarisch Positionsbestimmungsphasen PP1, PP2, PP3, Drehmomentphasen DP1, DP2 und Reduktionsphasen RP1, RP2.

Exemplarisch werden die Betriebsphasen nacheinander in der Reihenfolge: Positionsbestimmungsphase, Drehmomentphase, Reduktionsphase durchgeführt. Zweckmäßigerweise werden die Betriebsphasen in der genannten Reihenfolge mehrmals, insbesondere kontinuierlich wiederholt. Im gezeigten Beispiel werden die Betriebsphasen nacheinander in der Reihenfolge: erste Positionsbestimmungsphase PP1, erste Drehmomentphase DP1, erste Reduktionsphase RP1, zweite Positionsbestimmungsphase PP2, zweite Drehmomentphase DP2, zweite Reduktionsphase RP2, dritte Positionsbestimmungsphase PP3 durchgeführt.

Zweckmäßigerweise ist das Elektrowerkzeug 10 ausgebildet, mit der ersten Positionsbestimmungsphase PP1 zu beginnen. In der ersten Positionsbestimmungsphase PP1 liegt der erste Elektromotor-Strom I1 unter dem Schwellenwert SW. Das Elektrowerkzeug 10 ist ausgebildet, während der ersten Positionsbestimmungsphase PP1 die Rotorposition auf Basis des ersten und/oder zweiten Elektromotor-Stroms zu bestimmen.

In der ersten Positionsbestimmungsphase PP1 wird insbesondere der Schritt S2 und optional davor der Schritt S1 durchgeführt.

Zweckmäßigerweise ist das Elektrowerkzeug 10 ausgebildet, nach der Positionsbestimmungsphase die erste Drehmomentphase DP1 durchzuführen und während der ersten Drehmomentphase DP1 den ersten Elektromotor-Strom I1 über den Schwellenwert SW zu erhöhen. Zweckmäßigerweise ist das Elektrowerkzeug 10 ausgebildet, während der ersten Drehmomentphase DP1 keine Ermittlung der Rotorposition auf Basis des ersten und/oder zweiten Elektromotor-Stroms durchzuführen.

In der ersten Drehmomentphase DP1 werden insbesondere die Schritte S3 und S4 durchgeführt.

Zweckmäßigerweise verwendet das Elektrowerkzeug 10 für die Ansteuerung des Elektromotors 2 in der ersten Drehmomentphase DP1 die in der ersten Positionsbestimmungsphase PP1 ermittelte Rotorposition.

Zweckmäßigerweise ist das Elektrowerkzeug 10 ausgebildet, nach der ersten Drehmomentphase DP1 die erste Reduktionsphase RP1 durchzuführen und während der ersten Reduktionsphase RP1 den ersten Elektromotor-Strom I1 unter den Schwellenwert SW zu reduzieren.

In der ersten Reduktionsphase werden insbesondere die Schritte S6 und S7 durchgeführt.

Zweckmäßigerweise fährt das Elektrowerkzeug 10 dann mit der zweiten Positionsbestimmungsphase PP2 fort, insbesondere dann, wenn das Elektrowerkzeug 10 im Rahmen einer Prüfung festgestellt hat, dass der erste Elektromotor-Strom I1 kleiner als der Schwellenwert SW ist. Das Elektrowerkzeug 10 führt die zweite Positionsbestimmungsphase PP2 wie die erste Positionsbestimmungsphase PP1 durch und fährt dann mit den nachfolgenden Betriebsphasen in der vorstehend erläuterten Weise fort.

## Patentansprüche

1. Verfahren zum Ermitteln einer Rotorposition eines Elektromotors (2) eines Elektrowerkzeugs (10), insbesondere eines Elektro-Schraubwerkzeugs, umfassend die Schritte:
Prüfen (S4), ob ein erster Elektromotor-Strom (I1) unter einem Schwellenwert (SW) liegt, und in Ansprechen darauf, dass die Prüfung ergibt, dass der erste Elektromotor-Strom (I1) unter dem Schwellenwert (SW) liegt, Ermitteln (S5) einer Rotorposition des Elektromotors (2) auf Basis des ersten Elektromotor-Stroms (I1) und/oder eines zweiten Elektromotor-Stroms, wobei bei der Ansteuerung des Elektromotors (10) nacheinander eine Positionsbestimmungsphase (PP1, PP2, PP3), eine Drehmomentphase (DP1, DP2) und eine Reduktionsphase (RP1, RP2) durchgeführt wird, wobei die Positionsbestimmungsphase (PP1, PP2, PP3) in Ansprechen darauf durchgeführt wird, dass der erste Elektromotor-Strom (I1) unter dem Schwellenwert (SW) liegt, und im Rahmen der Positionsbestimmungsphase (PP1, PP2, PP3) die Rotorposition auf Basis des ersten und/oder zweiten Elektromotor-Stroms bestimmt wird.

2. Verfahren nach Anspruch 1, wobei ein Überschreiten des ersten Elektromotor-Stroms (I1) über den Schwellenwert (SW) eine magnetische Sättigung des Elektromotors (2) anzeigt.

3. Verfahren nach Anspruch 1 oder 2, ferner umfassend: Prüfen (S4), ob der erste Elektromotor-Strom (I1) unter dem Schwellenwert (SW) liegt, und in Ansprechen darauf, dass die Prüfung ergibt, dass der erste Elektromotor-Strom (I1) über dem Schwellenwert (SW) liegt, kein Ermitteln der Rotorposition auf Basis des ersten Elektromotor-Stroms (I1) und/oder des zweiten Elektromotor-Stroms.

4. Verfahren nach einem der voranstehenden Ansprüche, ferner umfassend: als Reaktion darauf, dass die Prüfung ergibt, dass der erste Elektromotor-Strom (I1) über dem Schwellenwert (SW) liegt, Reduzieren (S6, S7) des ersten Elektromotor-Stroms (I1), bis der Elektromotor-Strom (I1) unter dem Schwellenwert (SW) liegt.

5. Verfahren nach Anspruch 4, ferner umfassend: Nach der Reduzierung des ersten Elektromotor-Stroms (I1) unter den Schwellenwert (SW), Ermitteln (S8) der Rotorposition auf Basis des ersten und/oder zweiten Elektromotor-Stroms.

6. Verfahren nach einem voranstehenden Anspruch, ferner umfassend: nach einer Ermittlung der Rotorposition, Erhöhen (S3) des ersten Elektromotor-Stroms (I1) über den Schwellenwert (SW).

7. Verfahren nach einem der voranstehenden Ansprüche, wobei die Drehmomentphase (DP1, DP2) nach der Positionsbestimmungsphase (PP1, PP2, PP3) durchgeführt wird und im Rahmen der Drehmomentphase (DP1, DP2) der erste Elektromotor-Strom (I1) über den Schwellenwert (SW) erhöht wird, und im Rahmen der Positionsbestimmungsphase (PP1, PP2, PP3) keine Bestimmung der Rotorposition auf Basis des ersten und/oder zweiten Elektromotor-Stroms durchgeführt wird.

8. Verfahren nach einem der voranstehenden Ansprüche, wobei nach der Drehmomentphase (DP1, DP2) die Reduktionsphase (RP1, RP2) durchgeführt wird und im Rahmen der Reduktionsphase (RP1, RP2) der erste Elektromotor-Strom (I1) unter den Schwellenwert (SW) reduziert wird.

9. Verfahren nach einem der voranstehenden Ansprüche, wobei die Positionsbestimmungsphase (PP1, PP2, PP3), die Drehmomentphase (DP1, DP2) und die Reduktionsphase (RP1, RP2) in der genannten Reihenfolge nacheinander mehrmals wiederholt werden.

10. Verfahren nach einem der voranstehenden Ansprüche, wobei auf Basis der ermittelten Rotorposition eine Ansteuerung, insbesondere eine Kommutierung, des Elektromotors (2) durchgeführt wird.

11. Verfahren nach einem der voranstehenden Ansprüche, wobei der Elektromotor (2) ein bürstenloser Gleichstrommotor ist.

12. Verfahren nach einem der voranstehenden Ansprüche, ferner umfassend: Beaufschlagen des Elektromotors (2) mit einem Testsignal und Ermitteln der Rotorposition auf Basis der Reaktion des ersten und/oder zweiten Elektromotor-Stroms auf das Testsignal.

13. Elektrowerkzeug (10), insbesondere Elektro-Schraubwerkzeug, mit einem Elektromotor (2), wobei das Elektrowerkzeug (10) ausgebildet ist, zu prüfen, ob ein erster Elektromotor-Strom (I1) unter einem Schwellenwert (SW) liegt, und in Ansprechen darauf, dass die Prüfung ergibt, dass der erste Elektromotor-Strom (I1) unter dem Schwellenwert (SW) liegt, eine Rotorposition des Elektromotors (2) auf Basis des ersten Elektromotor-Stroms (I1) und/oder eines zweiten Elektromotor-Stroms zu ermitteln, wobei das Elektrowerkzeug (10) ausgebildet ist, bei der Ansteuerung des Elektromotors (10) nacheinander eine Positionsbestimmungsphase (PP1, PP2, PP3), eine Drehmomentphase (DP1, DP2) und eine Reduktionsphase (RP1, RP2) durchzuführen, wobei das Elektrowerkzeug ausgebildet ist, die Positionsbestimmungsphase (PP1, PP2, PP3) in Ansprechen darauf durchzuführen, dass der erste Elektromotor-Strom (I1) unter dem Schwellenwert (SW) liegt, und im Rahmen der Positionsbestimmungsphase (PP1, PP2, PP3) die Rotorposition auf Basis des ersten und/oder zweiten Elektromotor-Stroms zu bestimmen.

14. Elektrowerkzeug (10) nach Anspruch 13, wobei das Elektrowerkzeug (10) ausgebildet ist, ein Verfahren nach einem der Ansprüche 1 bis 12 durchzuführen.

## Claims

1. Method for determining a rotor position of an electric motor (2) of a power tool (10), in particular an electric screwdriving tool, comprising the steps of: checking (S4) whether a first electric motor current (I1) is below a threshold value (SW), and in response to the check indicating that the first electric motor current (I1) is below the threshold value (SW), determining (S5) a rotor position of the electric motor (2) based on the first electric motor current (I1) and/or a second electric motor current, wherein a position determination phase (PP1, PP2, PP3), a torque phase (DP1, DP2) and a reduction phase (RP1, RP2) are carried out successively when driving the electric motor (10), wherein the position determination phase (PP1, PP2, PP3) is performed in response to the first electric motor current (I1) being below the threshold value (SW), and within the position determination phase (PP1, PP2, PP3) the rotor position is determined based on the first and/or second electric motor current.

2. Method according to claim 1, wherein the first electric motor current (I1) exceeding the threshold value (SW) indicates a magnetic saturation of the electric motor (2).

3. Method according to claim 1 or 2, further comprising: checking (S4) whether the first electric motor current (I1) is below the threshold value (SW), and in response to the check indicating that the first electric motor current (I1) is above the threshold value (SW), not determining the rotor position based on the first electric motor current (I1) and/or the second electric motor current.

4. Method according to one of the preceding claims, further comprising: in response to the check indicating that the first electric motor current (I1) is above the threshold value (SW), reducing (S6, S7) the first electric motor current (I1) until the electric motor current (I1) is below the threshold value (SW).

5. Method according to claim 4, further comprising: after reducing the first electric motor current (I1) below the threshold value (SW), determining (S8) the rotor position based on the first and/or second electric motor current.

6. Method according to one of the preceding claims, further comprising: after a determination of the rotor position, increasing (S3) the first electric motor current (I1) above the threshold value (SW).

7. Method according to one of the preceding claims, wherein the torque phase (DP1, DP2) is performed after the position determination phase (PP1, PP2, PP3) and within the torque phase (DP1, DP2) the first electric motor current (I1) is increased above the threshold value (SW), and within the position determination phase (PP1, PP2, PP3) no determination of the rotor position is performed based on the first and/or second electric motor current.

8. Method according to one of the preceding claims, wherein after the torque phase (DP1, DP2) the reduction phase (RP1, RP2) is performed and within the reduction phase (RP1, RP2) the first electric motor current (I1) is reduced below the threshold value (SW).

9. Method according to one of the preceding claims, wherein the position determination phase (PP1, PP2, PP3), the torque phase (DP1, DP2) and the reduction phase (RP1, RP2) are repeated several times in succession in the stated order.

10. Method according to one of the preceding claims, wherein a control, in particular a commutation, of the electric motor (2) is carried out on the basis of the determined rotor position.

11. Method according to one of the preceding claims, wherein the electric motor (2) is a brushless DC motor.

12. Method according to one of the preceding claims, further comprising: applying a test signal to the electric motor (2) and determining the rotor position based on the response of the first and/or second electric motor current to the test signal.

13. Power tool (10), in particular electric screwdriving tool, having an electric motor (2), the power tool (10) being configured to check whether a first electric motor current (I1) is below a threshold value (SW), and, in response to the check indicating that the first electric motor current (I1) is below the threshold value (SW), to determine a rotor position of the electric motor (2) on the basis of the first electric motor current (I1) and/or a second electric motor current, wherein the power tool (10) is configured to carry out a position determination phase (PP1, PP2, PP3), a torque phase (DP1, DP2) and a reduction phase (RP1, RP2) successively when driving the electric motor (10), wherein the power tool is adapted to carry out the position determination phase (PP1, PP2, PP3) in response to the first electric motor current (I1) being below the threshold value (SW), and within the position determination phase (PP1, PP2, PP3) to determine the rotor position based on the first and/or second electric motor current.

14. Power tool (10) according to claim 13, wherein the power tool (10) is adapted to perform a method according to one of claims 1 to 12.

## Revendications

1. Procédé de détermination d'une position de rotor d'un moteur électrique (2) d'un outil électrique (10), en particulier d'un outil électrique de vissage, comprenant les étapes :
de vérification (E4) si un premier courant de moteur électrique (11) est inférieur à une valeur de seuil (SW), et en réponse à la vérification montrant que le premier courant de moteur électrique (11) est inférieur à la valeur de seuil (SW), de détermination (E5) d'une position de rotor du moteur électrique (2) sur la base du premier courant de moteur électrique (11) et/ou d'un deuxième courant de moteur électrique, dans lequel une phase de définition de position (PP1, PP2, PP3), une phase de couple de rotation (DP1, DP2) et une phase de réduction (RP1, RP2) sont mises en œuvre les unes après les autres lors du pilotage du moteur électrique (10), dans lequel la phase de définition de position (PP1, PP2, PP3) est mise en œuvre en réponse au fait que le premier courant de moteur électrique (11) est inférieur à la valeur de seuil (SW), et, dans le cadre de la phase de définition de position (PP1, PP2, PP3), la position de rotor est définie sur la base du premier et/ou du deuxième courant de moteur électrique.

2. Procédé selon la revendication 1, dans lequel un dépassement du premier courant de moteur électrique (11) au-delà de la valeur de seuil (SW) indique une saturation magnétique du moteur électrique (2).

3. Procédé selon la revendication 1 ou 2, comprenant en outre : la vérification (E4) pour savoir si le premier courant de moteur électrique (11) est inférieur à la valeur de seuil (SW), et en réponse à la vérification montrant que le premier courant de moteur électrique (11) est supérieur à la valeur de seuil (SW), aucune détermination de la position de rotor sur la base du premier courant de moteur électrique (11) et/ou du deuxième courant de moteur électrique.

4. Procédé selon l'une quelconque des revendications précédentes, comprenant en outre : en réaction à la vérification montrant que le premier courant de moteur électrique (11) est supérieur à la valeur de seuil (SW), la réduction (E6, E7) du premier courant de moteur électrique (11) jusqu'à ce que le courant de moteur électrique (11) soit inférieur à la valeur de seuil (SW).

5. Procédé selon la revendication 4, comprenant en outre, après la réduction du premier courant de moteur électrique (11) sous la valeur de seuil (SW), la détermination (E8) de la position de rotor sur la base du premier et/ou du deuxième courant de moteur électrique.

6. Procédé selon l'une quelconque des revendications précédentes, comprenant en outre : après une détermination de la position de rotor, l'augmentation (E3) du premier courant de moteur électrique (11) au-dessus de la valeur de seuil (SW).

7. Procédé selon l'une quelconque des revendications précédentes, dans lequel la phase de couple de rotation (DP1, DP2) est mise en œuvre après la phase de définition de position (PP1, PP2, PP3) et le premier courant de moteur électrique (11) est augmenté au-dessus de la valeur de seuil (SW) dans le cadre de la phase de couple de rotation (DP1, DP2), et, dans le cadre de la phase de définition de position (PP1, PP2, PP3), aucune définition de la position de rotor sur la base du premier et/ou du deuxième courant de moteur électrique n'est mise en œuvre.

8. Procédé selon l'une quelconque des revendications précédentes, dans lequel après la phase de couple de rotation (DP1, DP2), la phase de réduction (RP1, RP2) est mise en œuvre et, dans le cadre de la phase de réduction (RP1, RP2), le premier courant de moteur électrique (11) est réduit sous la valeur de seuil (SW).

9. Procédé selon l'une quelconque des revendications précédentes, dans lequel la phase de définition de position (PP1, PP2, PP3), la phase de couple de rotation (DP1, DP2) et la phase de réduction (RP1, RP2) sont répétées les unes après les autres à plusieurs reprises dans l'ordre mentionné.

10. Procédé selon l'une quelconque des revendications précédentes, dans lequel un pilotage, en particulier une commutation, du moteur électrique (2) est mis en œuvre sur la base de la position de rotor déterminée.

11. Procédé selon l'une quelconque des revendications précédentes, dans lequel le moteur électrique (2) est un moteur à courant continu sans balai.

12. Procédé selon l'une quelconque des revendications précédentes, comprenant en outre : l'exposition du moteur électrique (2) à l'action d'un signal de test et la détermination de la position de rotor sur la base de la réaction du premier et/ou du deuxième courant de moteur électrique au signal de test.

13. Outil électrique (10), en particulier outil électrique de vissage, avec un moteur électrique (2), dans lequel l'outil électrique (10) est réalisé pour vérifier si un premier courant de moteur électrique (11) est inférieur à une valeur de seuil (SW), et en réponse à la vérification montrant que le premier courant de moteur électrique (11) est inférieur à la valeur de seuil (SW), pour déterminer une position de rotor du moteur électrique (2) sur la base du premier courant de moteur électrique (11) et/ou d'un deuxième courant de moteur électrique, dans lequel l'outil électrique (10) est réalisé pour mettre en œuvre les unes après les autres une phase de définition de position (PP1, PP2, PP3), une phase de couple de rotation (DP1, DP2) et une phase de réduction (RP1, RP2) lors du pilotage du moteur électrique (10), dans lequel l'outil électrique est réalisé pour mettre en œuvre la phase de définition de position (PP1, PP2, PP3) en réponse au fait que le premier courant de moteur électrique (11) est inférieur à la valeur de seuil (SW) et pour définir, dans le cadre de la phase de définition de position (PP1, PP2, PP3), la position de rotor sur la base du premier et/ou du deuxième courant de moteur électrique.

14. Outil électrique (10) selon la revendication 13, dans lequel l'outil électrique (10) est réalisé pour mettre en œuvre un procédé selon l'une quelconque des revendications 1 à 12.
